(19) Europäisches Patentamt
European Patent Office
Office européen des brevets

(11) **EP 2 872 871 B1**

(12) **FASCICULE DE BREVET EUROPEEN**

(45) Date de publication et mention
de la délivrance du brevet:
**18.08.2021 Bulletin 2021/33**

(51) Int Cl.:
*G01N 15/02* *(2006.01)*   *G01N 21/17* *(2006.01)*
*G01N 21/45* *(2006.01)*   *G01N 21/47* *(2006.01)*
*G02B 27/42* *(2006.01)*

(21) Numéro de dépôt: **13735326.4**

(22) Date de dépôt: **12.07.2013**

(86) Numéro de dépôt international:
**PCT/EP2013/064778**

(87) Numéro de publication internationale:
**WO 2014/009519 (16.01.2014 Gazette 2014/03)**

(54) **PROCÉDÉ ET SYSTÈME DE RECONSTRUCTION DE PROPRIÉTÉS OPTIQUES D'OBJETS DIFFRACTANTS BAIGNANT DANS UN MILIEU LIQUIDE**

VERFAHREN UND SYSTEM ZUR REKONSTRUKTION DER OPTISCHEN EIGENSCHAFTEN VON IN EINEM FLÜSSIGMEDIUM GEBADETEN, LICHTBRECHENDEN OBJEKTEN

METHOD AND SYSTEM FOR RECONSTRUCTING OPTICAL PROPERTIES OF DIFFRACTING OBJECTS BATHED IN A LIQUID MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 FR 1256816**

(43) Date de publication de la demande:
**20.05.2015 Bulletin 2015/21**

(73) Titulaire: **Commissariat à l'Energie Atomique et aux Energies Alternatives
75015 Paris (FR)**

(72) Inventeurs:
• **ALLIER, Cédric**
 **F-38000 Grenoble (FR)**
• **VINJIMORE KESAVAN, Srikanth**
 **F-38100 Grenoble (FR)**

(74) Mandataire: **Lavoix
2, place d'Estienne d'Orves
75441 Paris Cedex 09 (FR)**

(56) Documents cités:
• **SUNGKYUO S E ET AL: "Lensfree holographic imaging for on-chip cytometry and diagnostic", LAB ON A CHIP, ROYAL SOCIETY OF CHEMISTRY, vol. 9, 1 janvier 2009 (2009-01-01), pages 777-787, XP002582445, ISSN: 1473-0197, DOI: 10.1039/B813943A [extrait le 2008-12-05]**
• **Loic Denis ET AL: "Twin-image noise reduction by phase retrieval in in-line digital holography", Proceedings of SPIE, vol. 5914, 18 August 2005 (2005-08-18), page 59140J, XP055382881, US DOI: 10.1117/12.617405 ISBN: 978-1-5106-1533-5**

**Description**

La présente invention concerne un procédé de reconstruction de propriétés optiques d'objets diffractants baignant dans un milieu liquide, le milieu liquide étant délimité par une surface transparente et les objets diffractants étant au contact de la surface transparente.

L'invention concerne également un système de reconstruction de propriétés optiques, comprenant une source de lumière spatialement cohérente, un photodétecteur matriciel et des moyens de reconstruction de propriétés optiques des objets, suivant un algorithme de reconstruction à partir de l'intensité mesurée et en fonction d'une hauteur de reconstruction.

Le procédé de reconstruction comprend :

- l'éclairement du milieu par la source de lumière spatialement cohérente,
- la mesure, par le photodétecteur matriciel, d'une intensité d'au moins une figure de diffraction transmise par le milieu éclairé selon une direction verticale, la ou chaque figure de diffraction correspondant à des ondes diffractées par un ou plusieurs objets diffractants lors de l'éclairement du milieu, et
- la reconstruction des propriétés optiques des objets, suivant l'algorithme de reconstruction à partir de l'intensité mesurée et en fonction de la hauteur de reconstruction.

Autrement dit, la reconstruction des propriétés optiques est effectuée à la hauteur de reconstruction.

L'invention s'applique en particulier à la reconstruction de propriétés optiques de particules, notamment des particules biologiques, telles que des cellules, des bactéries, ou encore des virus. Ces particules biologiques présentent une taille de l'ordre de 10 $\mu$m pour les cellules, de l'ordre de 1 $\mu$m pour les bactéries.

Par propriétés optiques, on entend notamment l'absorption de l'objet ou le retard de phase introduit par l'objet, sachant que ces paramètres représentent respectivement le module et l'argument de la fonction d'opacité complexe de l'objet. L'invention permet notamment de déterminer la distribution spatiale de ces paramètres.

L'invention concerne l'imagerie sans lentille, c'est-à-dire l'acquisition, par le photodétecteur matriciel, d'images formées par le rayonnement transmis directement par le milieu, en l'absence d'une optique de grossissement disposée entre le milieu et le photodétecteur matriciel. Le photodétecteur matriciel est également appelé dans ce cas dispositif d'imagerie sans lentille, et est apte à former une image du milieu tout en étant placé à une faible distance de celui-ci. Par faible distance, on entend une distance comprise entre 100 $\mu$m et quelques centimètres, de préférence inférieure à 1 cm.

On connaît, de l'article intitulé « Lensfree in-line holographic detection of bacteria » de Poher et al, un procédé de reconstruction de propriétés optiques d'objets diffractants à l'aide d'un dispositif d'imagerie sans lentille.

Des particules de poussières sont disposées sur la surface d'un capot de protection, situé à environ 400 $\mu$m d'un capteur CMOS (de l'anglais *Complementary Metal Oxyde Semi-conductor*), et le procédé décrit dans cet article vise à reconstruire les propriétés optiques de ces particules de poussières. Les particules de poussières sont éclairées par une source de lumière spatialement cohérente, et le capteur CMOS mesure l'intensité des figures de diffraction correspondant aux ondes diffractées par les particules de poussières lorsqu'elles sont éclairées.

L'amplitude complexe des particules de poussières est reconstruite suivant un algorithme de reconstruction à partir de l'intensité mesurée, l'algorithme de reconstruction étant fonction d'une hauteur de reconstruction. La hauteur de reconstruction est sensiblement égale à la hauteur du capot de protection du capteur CMOS, c'est-à-dire sensiblement égale à la distance entre les particules de poussières et le capteur CMOS suivant la direction d'éclairement des particules.

Toutefois, un tel procédé de reconstruction ne permet pas d'accéder à des informations plus précises, concernant notamment la structure des particules observées. Ainsi, lorsque les particules observées sont des cellules, ce procédé ne permet pas de distinguer et de visualiser le noyau du cytoplasme d'une même cellule. Le document SUNGKYUO S E ET AL "Lensfree holographic imaging for on-chip cytometry and diagnostic" divulgue un procédé d'illumination d'un objet par un faisceau cohérent, la formation d'une image de diffraction et l'analyse de la dite image ainsi que sa comparaison avec une image en librairie afin de caractériser l'objet étudié. Le document Loic Denis ET AL "Twin-image noise réduction by phase retrieval in in-line digital holography", divulgue la reconstruction des propriétés optiques d'un objet diffractant, et l'élimination du bruit accompagnant l'image réelle du à un manque d'information sur la phase par filtrage.

Le but de l'invention est donc de proposer un procédé et un système de reconstruction de propriétés optiques d'objets diffractants, pour des objets présentant un diamètre inférieur à 50 $\mu$m, notamment des cellules, ou des colonies de bactéries, permettant d'obtenir des informations plus précises sur lesdits objets.

A cet effet, l'invention a pour objet un procédé de reconstruction de propriétés optiques d'objets diffractants baignant dans un milieu liquide, selon la revendication 1.

Suivant d'autres aspects avantageux de l'invention, le procédé de reconstruction est selon l'une quelconques des revendications 2 à 7.

L'invention a également pour objet un système de reconstruction de propriétés optiques d'objets diffractants baignant dans un milieu liquide, selon la revendication 8.

Suivant d'autres aspects avantageux de l'invention, le système de reconstruction est selon la revendication 9 ou 10.

Les caractéristiques et avantages de l'invention apparaîtront à la lecture de la description qui va suivre, donnée uniquement à titre d'exemple non limitatif, et faite en référence aux dessins annexés, sur lesquels :

- la figure 1 est une vue en perspective d'un système de reconstruction selon l'invention,
- la figure 2 est une vue éclatée du système de reconstruction de la figure 1,
- la figure 3 est une représentation schématique du système de reconstruction de la figure 1, le système de reconstruction comprenant une source de lumière, un photodétecteur matriciel et des moyens de reconstruction de propriétés optiques des objets,
- la figure 4 est un organigramme d'un procédé de reconstruction selon l'invention,
- la figure 5 est un nuage de points comparant la longueur du plus grand côté d'objets diffractants en forme d'ellipse, selon que cette longueur est déterminée à l'aide du procédé de reconstruction selon l'invention ou bien à l'aide d'un microscope,
- la figure 6 est un nuage de points comparant l'aire d'objets diffractants en forme d'ellipse, selon que cette aire est déterminée à l'aide du procédé de reconstruction selon l'invention ou bien à l'aide du microscope,
- la figure 7 est une vue de cinq images différentes acquises par le photodétecteur du système de reconstruction des figures 1 à 3, pour cinq objets diffractants distincts, chacun comportant une première structure et une deuxième structure,
- la figure 8 est une vue des images respectives des premières structures des cinq objets de la figure 7, pour une hauteur de reconstruction dans un premier intervalle de valeurs comprises entre 280 $\mu$m et 350 $\mu$m,
- la figure 9 est une vue des images de référence respectives des premières structures des cinq objets de la figure 7, les images de référence étant obtenues à l'aide du microscope,
- la figure 10 est une vue des images respectives des deuxièmes structures des cinq objets de la figure 7, pour une hauteur de reconstruction dans un premier intervalle de valeurs comprises entre 410 $\mu$m et 450 $\mu$m,
- la figure 11 est une vue des images de référence respectives des deuxièmes structures des cinq objets de la figure 7, obtenues à l'aide du microscope,
- la figure 12 est une vue de l'image acquise par le photodétecteur du système de reconstruction des figures 1 à 3 pour un autre objet diffractant,
- la figure 13 est une vue de l'image de l'objet de la figure 12, dont l'absorption est reconstruite à l'aide du système de reconstruction selon l'invention,
- la figure 14 est une vue d'une image de référence de l'objet de la figure 12, cette image représentant un substrat comportant une zone fonctionnalisée propice à l'adhésion cellulaire, et
- les figures 15 à 20 illustrent un exemple de mise en œuvre d'un algorithme d'obtention d'une image de reconstruction, représentant le module de l'absorption complexe, à une hauteur de reconstruction donnée et en fonction d'une image acquise par le photodétecteur du système de reconstruction des figures 1 à 3.

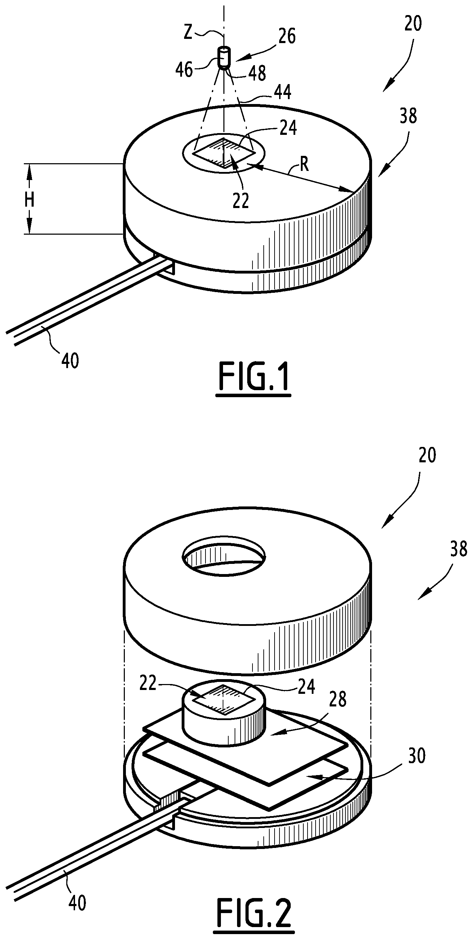

Sur les figures 1 et 2, un système 20 de reconstruction de propriétés optiques d'objets diffractants 22 baignant dans un milieu liquide 24, comprend une source de lumière 26 spatialement cohérente et un photodétecteur matriciel 28.

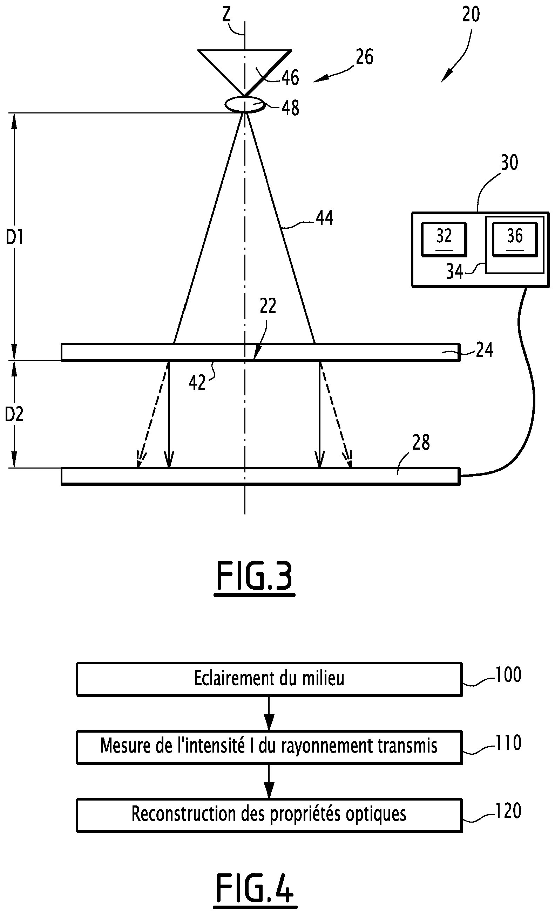

Le système de reconstruction 20 comprend également une unité de traitement d'informations 30, visible sur la figure 3, comportant un processeur 32 et une mémoire 34 apte à stocker un logiciel 36 de reconstruction des propriétés optiques des objets diffractants 22, les propriétés optiques étant reconstruites suivant un algorithme de reconstruction à partir d'une intensité I mesurée par le photodétecteur 28.

Le système de reconstruction 20 comprend un boîtier de protection 38, visible sur les figures 1 et 2, à l'intérieur duquel sont disposés notamment le photodétecteur 28 et l'unité de traitement d'informations 30. Le système de reconstruction 20 comprend une liaison filaire 40 d'alimentation électrique.

Les objets diffractants 22 sont, par exemple, des particules, telles que des particules biologiques, c'est-à-dire des cellules (par exemple des globules rouges, des globules bancs ou des plaquettes), des bactéries ou colonies bactériennes, des cellules ou agrégats de cellules. En variante, les particules diffractantes 22 sont des microbilles.

Les objets diffractants 22 présentent un diamètre de préférence inférieur à 20 $\mu$m. Le diamètre des objets diffractants 22 est, par exemple, compris entre 100 nm et 10 $\mu$m. Les bactéries présentent un diamètre de l'ordre de 1 $\mu$m et les cellules présentent un diamètre de l'ordre de 10 $\mu$m.

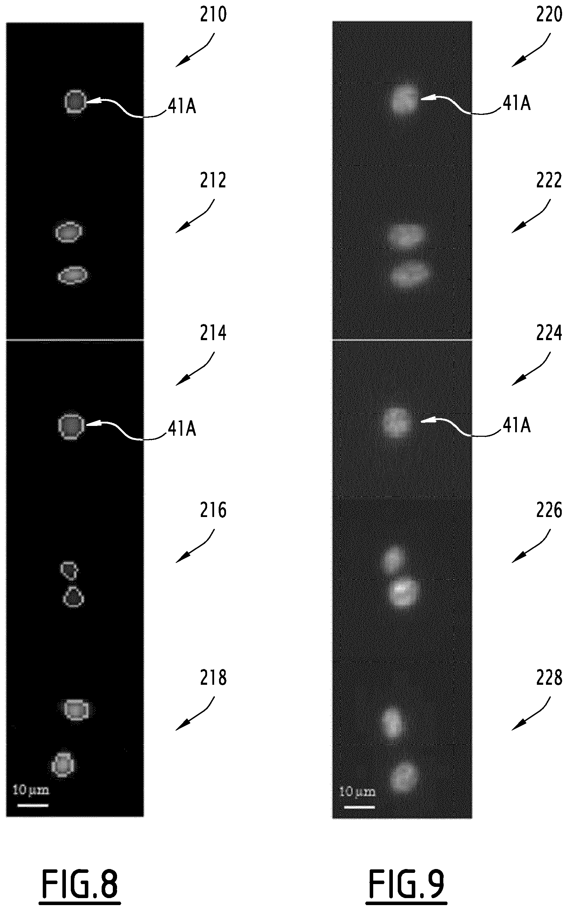

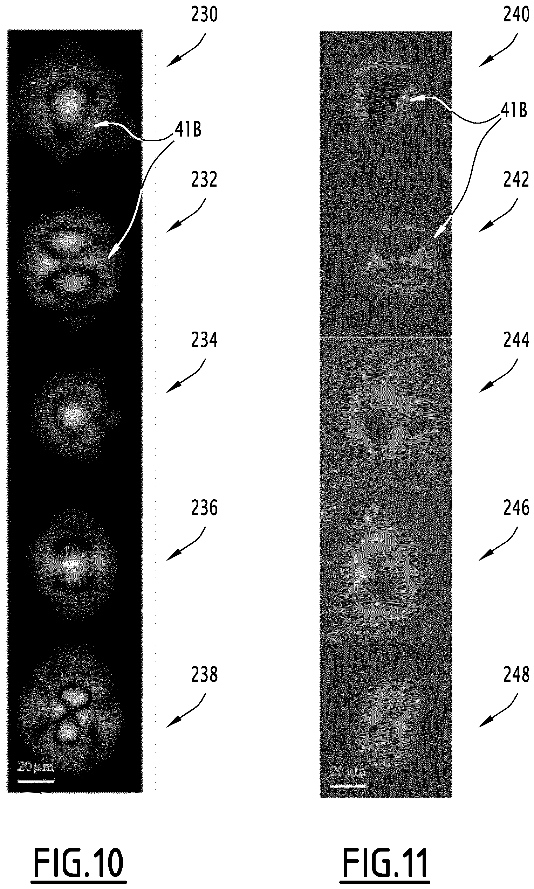

L'objet 22 comprend une première structure 41A et une deuxième structure 41B, visibles sur les figures 8 et 9, respectivement sur les figures 10 et 11. Dans l'exemple de réalisation des figures 8 à 11 où l'objet 22 est une cellule, la première structure 41A est un noyau et la deuxième structure 41B est un cytoplasme.

Le milieu liquide 24 est délimité par une surface transparente 42, visible sur la figure 3. Les objets diffractants 22 sont au contact de ladite surface transparente 42.

Le milieu 24 est disposé entre la source de lumière 26 et le photodétecteur matriciel 28, et est sensiblement perpendiculaire à une direction verticale Z correspondant à la direction d'éclairement du milieu par la source de lumière 26, comme représenté sur la figure 3.

La source de lumière 26 est propre à émettre un faisceau lumineux 44 selon la direction verticale Z, afin d'éclairer le milieu liquide 24 comprenant les objets diffractants 22.

La source de lumière 26 est disposée à une première distance D1 de la surface transparente 42 selon la direction verticale Z. La première distance D1 présente, de préférence, une valeur comprise entre 1 cm et 30 cm, par exemple égale à 8 cm.

La source de lumière 26 est une source spatialement cohérente. La source de lumière 26 comporte, par exemple, une source ponctuelle telle qu'une diode électroluminescente 46, également appelée LED (de l'anglais *Light-Emitting Diode),* et un diaphragme 48 disposé au contact de la LED 46, comme représenté sur la figure 3. Le diaphragme 48 a un diamètre compris entre 50 $\mu$m et 500 $\mu$m, et est placé au contact de la source de lumière 26. Cela permet d'augmenter la cohérence spatiale du rayonnement lumineux.

En variante, la source de lumière 26 est constituée de la diode électroluminescente 46, et ne comporte pas de diaphragme. La diode électroluminescente 46 présente alors des dimensions suffisamment réduites pour être considérée comme spécialement cohérente, le diamètre de la diode électroluminescence 46 étant inférieur au dixième de la première distance D1 séparant cette diode électroluminescente de la surface transparente 42.

En variante encore, la source de lumière 26 est une source de lumière spatialement et temporellement cohérente, par exemple une diode laser (DL) ou encore une diode laser de type VCSEL (de l'anglais *Vertical Cavity Surface Emitting Laser).*

Le photodétecteur matriciel 28 comporte une pluralité de pixels, non représentés. Chaque pixel du photodétecteur 28 présente des dimensions inférieures ou égales à 10 $\mu$m, voire 4 $\mu$m. Chaque pixel est, par exemple, en forme d'un carré dont le côté est de valeur inférieure ou égale à 10 $\mu$m, voire à 4 $\mu$m. En variante, chaque pixel est en forme d'un carré de 2,2 $\mu$m de côté.

Le photodétecteur 28 est disposé à une deuxième distance D2 de la surface transparente 42 selon la direction verticale Z. La deuxième distance D2 présente une valeur comprise entre 100 $\mu$m et quelques centimètres, de préférence inférieure à 1 cm, et de préférence encore comprise entre 100 $\mu$m et 2 mm. Dans l'exemple de réalisation décrit, la deuxième distance D2 est égale à 700 $\mu$m.

Le fait de privilégier une deuxième distance D2 de faible valeur, c'est-à-dire une distance courte entre le photodétecteur matriciel 28 et la surface transparente 42, permet de limiter les phénomènes d'interférence entre différentes figures de diffraction lorsque le milieu 24 est éclairé.

Le photodétecteur matriciel 28 est propre à acquérir des images du rayonnement transmis par le milieu 24 contenant les objets diffractants 22 éclairés par le faisceau lumineux 44. Par rayonnement transmis, on entend le rayonnement traversant le milieu 24 de telle sorte que le photodétecteur matriciel 28 et la source de lumière 26 sont situés de part et d'autre du milieu 24 et des objets diffractants 22.

Le photodétecteur matriciel 28 est un capteur d'images en deux dimensions, à savoir dans un plan perpendiculaire à l'axe longitudinal X. Le photodétecteur matriciel 28 est un capteur d'images pixélisé, par exemple un capteur CMOS. En variante, le photodétecteur matriciel 28 est un capteur CCD (de l'anglais *Charged-Coupled Device).*

Le photodétecteur matriciel 28 comporte en complément des microlentilles, non représentées, chaque microlentille étant disposée au-dessus d'un pixel correspondant. De telles microlentilles sont intégrées au capteur. Elles permettent d'améliorer le rendement de collecte et ne forment pas une optique de grossissement disposée entre la surface transparente 42 et le photodétecteur 28.

Les images acquises par le photodétecteur matriciel 28 sont formées par le rayonnement transmis directement par le milieu éclairé 24, en l'absence d'une optique de grossissement disposée entre la surface transparente 42 et le photodétecteur matriciel 28. Le photodétecteur 28 est également appelé dispositif d'imagerie sans lentille, et est apte à former une image du milieu 24, tout en étant placé à une faible distance de ce dernier. Par faible distance, on entend, comme indiqué précédemment, une distance inférieure à quelques centimètres, de préférence inférieure à 1 cm, la deuxième distance D2 étant par exemple égale à 700 $\mu$m.

Le photodétecteur matriciel 28 est propre à mesurer l'intensité I d'au moins une figure de diffraction transmise par le milieu 24, la ou chaque figure de diffraction correspondant à des ondes diffractées par un ou plusieurs objets diffractants 22, lors de l'éclairement du milieu 24.

Le logiciel de reconstruction 36 est propre à reconstruire les propriétés optiques des objets diffractants 22, suivant l'algorithme de construction, à partir de l'intensité mesurée I. L'algorithme de reconstruction est fonction d'une hauteur de reconstruction Zr. Autrement dit, la reconstruction des propriétés optiques est effectuée avec une hauteur, selon la direction verticale Z, égale à la hauteur de reconstruction Zr.

Selon l'invention, et à la différence de l'état de la technique, la hauteur de reconstruction Zr présente une valeur strictement inférieure à celle de la deuxième distance D2 entre la surface transparente 42 et le photodétecteur matriciel

28 selon la direction verticale Z. La hauteur de reconstruction Zr est de préférence inférieure à 0,9 fois la deuxième distance D2, de préférence encore inférieure à 0,8 fois la deuxième distance D2.

Dans l'état de la technique, la hauteur de reconstruction Zr est habituellement égale à la distance entre l'objet à observer et le capteur matriciel, voire supérieure à cette distance entre l'objet et le capteur matriciel.

Les inventeurs ont constaté avec surprise que lorsque la hauteur de reconstruction Zr est, selon l'invention, strictement inférieure à la deuxième distance D2, c'est-à-dire à la distance entre l'objet 22 et le capteur matriciel 28, de préférence inférieure à 0,9 fois la deuxième distance D2, cela permet de reconstruire les propriétés optiques de structures composants les objets diffractants 22, et notamment de reconstruire les propriétés optiques de la première structure 41A et/ou de la deuxième structure 41B desdits objets 22.

Selon un aspect complémentaire de l'invention, les propriétés optiques de la première structure 41A sont reconstruites pour une première valeur Zr1 de la hauteur de la reconstruction, et les propriétés optiques de la deuxième structure 41B sont reconstruites pour une deuxième valeur Zr2 de la hauteur de reconstruction, la deuxième valeur Zr2 étant distincte de la première valeur Zr1. Dans les exemples qui suivent, la propriété optique reconstruite est l'absorption de la particule, autrement dit le module de la fonction d'opacité complexe a définie ci après. Chaque image reconstruite représente alors la distribution spatiale de l'absorption dans le plan de reconstruction. Plus le niveau de gris est élevé, plus l'absorption est élevée.

Dans l'exemple de réalisation des cellules diffractantes 22, une image représentative d'une structure 41A est reconstruite pour un premier intervalle de valeurs comprises entre une première valeur minimale Zr1min et une première valeur maximale Zr1max. Une image représentative du cytoplasme 41B est reconstruite pour un deuxième intervalle de valeurs comprises entre une deuxième valeur minimale Zr2min et une deuxième valeur maximale Zr2max.

Le deuxième intervalle [Zr2min ; Zr2max] est distinct du premier intervalle [Zr1min ; Zr1max], le deuxième intervalle [Zr2min ; Zr2max] étant de préférence disjoint du premier intervalle [Zr1min; Zr1max]. Les valeurs du premier intervalle [Zr1min ; Zr1max] sont de préférence encore inférieures à celles du deuxième intervalle [Zr2min ; Zr2max]. Autrement dit, la première valeur maximale Zr1max est inférieure à la deuxième valeur minimale Zr2min.

Lorsque la deuxième distance D2 entre le milieu 24 et le photodétecteur matriciel 28 selon la direction verticale Z est sensiblement égale à 700 $\mu$m, le premier intervalle [Zr1min ; Zr1max] est l'intervalle de valeurs compris entre 280 $\mu$m et 350 $\mu$m, et le deuxième intervalle [Zr2min ; Zr2max] est l'intervalle de valeurs compris entre 410 $\mu$m et 450 $\mu$m.

En variante, lorsque la deuxième distance D2 est sensiblement égale à 500 $\mu$m, le premier intervalle [Zr1min ; Zr1max] est l'intervalle de valeurs compris entre 240 $\mu$m et 280 $\mu$m, et le deuxième intervalle [Zr2min ; Zr2max] est l'intervalle de valeurs compris entre 380 $\mu$m et 420 $\mu$m.

En variante, lorsque la deuxième distance D2 est sensiblement égale à 2000 $\mu$m, le premier intervalle [Zr1min ; Zr1max] est l'intervalle de valeurs compris entre 1200 $\mu$m et 1300 $\mu$m, et le deuxième intervalle [Zr2min ; Zr2max] est l'intervalle de valeurs compris entre 1400 $\mu$m et 1500 $\mu$m.

L'algorithme de reconstruction est connu en soi, et il vérifie l'équation suivante :

$$I(x, y) * h_{-Zr}(x, y) = e^{j2\pi\frac{-Zr}{\lambda}}\left(1 - a(x, y) - e^{j2\pi\frac{2Zr}{\lambda}}.a^*(x, y) * h_{-2Zr}(x, y)\right) \quad (1)$$

où I représente l'intensité mesurée par le photodétecteur matriciel 28,

x, y représentent les coordonnées dans un plan perpendiculaire à la direction verticale Z, * désigne le produit de convolution,

Zr représente la hauteur de reconstruction,

$\lambda$ représente la longueur d'onde de la source de lumière 26, j représente le nombre imaginaire unitaire,

a représente la fonction d'opacité complexe d'un objet 22, a* représente le complexe conjugué de a, et

$h_z$ est défini par l'équation suivante :

$$h_z(x, y) = \frac{1}{j\lambda z} e^{j2\pi\frac{z}{\lambda}} \exp(j\pi\frac{x^2 + y^2}{\lambda z}) . \quad (2)$$

L'équation (1) montre que l'algorithme de reconstruction est mis en œuvre avec une hauteur z, selon la direction verticale Z, égale à la hauteur de reconstruction Zr.

L'équation (1) est obtenue à l'aide des équations suivantes :

$$A_z(x,y) = t(x,y) * h_z(x,y) \tag{3}$$

où Az est la transformée de Fresnel de la transmittance t(x,y).

Des coefficients d'absorption a(x,y) et de transmission t(x,y) sont alors définis de la manière suivante :

$$t(x,y) = (1 - a(x,y)) \tag{4}$$

$$A_z(x,y) = t(x,y) * h_z(x,y) = (1 - a(x,y)) * h_z(x,y)$$
$$= 1 * h_z(x,y) - a(x,y) * h_z(x,y) = e^{j2\pi\frac{z}{\lambda}} - a(x,y) * h_z(x,y) \tag{5}$$

L'intensité I est alors définie de la manière suivante :

$$I = A.A^* = 1 - e^{j2\pi\frac{z}{\lambda}}.a^* * h_z^* - e^{-j2\pi\frac{z}{\lambda}}.a * h_z + (a * h_z).(a^* * h_z^*) \tag{6}$$

Les propriétés duales de la transformée de Fresnel correspondant aux équations suivantes :

$$h_z^* * h_z = h_{-z} * h_z$$
$$h_z * h_z = h_{2z} \tag{7}$$

permettent alors d'obtenir l'équation de reconstruction (1) :

$$I * h_{-z} \approx \left( 1 - e^{j2\pi\frac{z}{\lambda}}.a^* * h_z^* - e^{-j2\pi\frac{z}{\lambda}}.a * h_z \right) * h_{-z}$$

$$I * h_{-z} = e^{j2\pi\frac{-z}{\lambda}} - e^{j2\pi\frac{z}{\lambda}}.a^* * h_z^* * h_{-z} - e^{-j2\pi\frac{z}{\lambda}}.a * h_z * h_{-z} \tag{8}$$

$$I * h_{-z} = e^{j2\pi\frac{-z}{\lambda}} - e^{j2\pi\frac{z}{\lambda}}.a^* * h_{-z} * h_{-z} - e^{-j2\pi\frac{z}{\lambda}}.a$$

$$I * h_{-z} = e^{j2\pi\frac{-z}{\lambda}}\left( 1 - a - e^{j2\pi\frac{2z}{\lambda}}.a^* * h_{-2z} \right)$$

A partir de l'image mesurée I(x,y), on obtient aisément la fonction d'opacité complexe a(x,y) selon des algorithmes usuels, décrits dans la littérature, et en particulier dans la publication « Twin-image noise reduction by phase retrieval in inline digital holography», SPIES's Symposium on Optical Science and Technology, 2005. Un algorithme simple est détaillé à titre d'exemple à la fin de la description.

Le boitier de protection 38 est, par exemple, en forme d'un cylindre, comme représenté sur les figures 1 et 2. Le boitier de protection 38 présente une hauteur H selon la direction verticale Z, et un rayon R selon une direction radiale perpendiculaire à la direction verticale Z. La hauteur H et le rayon R du boitier 38 sont, par exemple, centimétriques.

La surface transparente 42 est de préférence fonctionnalisée pour permettre une meilleure adhérence des objets diffractants 22 à la surface 42. Par fonctionnalisation de la surface transparente 42, on entend une préparation de la surface 42 afin de permettre cette meilleure adhérence des objets diffractants 22 à la surface 42. Des protéines de fibronectine sont, par exemple, déposées sur la surface 42 après un nettoyage préalable de la surface 42 au plasma, puis avec de la soude. En variante, d"autres techniques connues de fonctionnalisation sont appliquées, telles que l'utilisation d'antigène-anticorps, l'utilisation d'ADN.

La surface transparente 42 est, par exemple, en forme d'une lame transparente, présentant une épaisseur sensiblement égale à 170 $\mu$m selon la direction verticale Z.

Le faisceau lumineux 44 est propre à éclairer directement le milieu 24 et les objets 22, en l'absence d'une optique de grossissement disposée entre la source de lumière 26 et le milieu 24.

La diode électroluminescente 46 est, par exemple, monochromatique avec une bande passante de largeur par exemple comprise entre 20 nm et 40 nm, de préférence égale à 30 nm. La diode électroluminescence 46 présente, par exemple, une longueur d'onde d'émission comprise entre 500 nm et 520 nm et une puissance de l'ordre du Watt.

Le diaphragme 48 présente un diamètre de valeur par exemple comprise entre 50 $\mu$m et 700 $\mu$m, par exemple égale à 500 $\mu$m, ou encore égale à 80 $\mu$m.

Le procédé de reconstruction selon l'invention va être à présent décrit à l'aide de la figure 4.

Lors de l'étape initiale 100, le milieu liquide 24 est éclairé à l'aide de la source de lumière 26 spatialement cohérente, le faisceau lumineux 44 étant dirigé suivant la direction verticale Z.

L'intensité I du rayonnement transmis par le milieu éclairé 24 est alors mesurée lors de l'étape 110 par le photodétecteur matriciel 28. Plus précisément, le photodétecteur matriciel 28 mesure l'intensité I des figures de diffraction transmises par le milieu éclairé 24, chaque figure de diffraction correspondant à des ondes diffractées par les objets diffractants 22 lors de l'éclairement du milieu 24, ces ondes diffractées interférant avec l'onde incidente.

Les propriétés optiques, notamment l'absorption et le retard de phase des objets diffractants 22 sont enfin reconstruites, lors de l'étape 120, à l'aide des moyens de reconstruction 36, suivant l'algorithme de reconstruction décrit précédemment et à partir de l'intensité mesurée I. Le retard de phase correspond à l'argument de la fonction d'opacité complexe a ; l'absorption correspond au module de la fonction d'opacité complexe a précédemment définie. D'une façon générale, une image de reconstruction représente la distribution spatiale de l'absorption ou du retard de phase.

Comme indiqué précédemment, la hauteur de reconstruction Zr présente une valeur strictement inférieure à celle de la deuxième distance D2 correspondant à la distance selon la direction verticale Z entre le milieu 24 et le photodétecteur matriciel 28, de préférence inférieure à 0,9 fois la deuxième distance D2, de préférence encore inférieure à 0,8 fois la deuxième distance D2.

D'une façon générale, on parle d'objet reconstruit 22 ou de structure reconstruite 41A, 41B pour désigner un objet 22 ou une structure 41A, 41B dont les propriétés optiques sont reconstruites suivant l'algorithme de reconstruction.

Selon un aspect complémentaire, les propriétés optiques des objets 22 sont reconstruites pour différentes valeurs de la hauteur de reconstruction Zr, chacune étant strictement inférieure à la valeur de la deuxième distance D2.

Dans l'exemple de réalisation décrit, le logiciel de reconstruction 36 fait varier, lors de l'étape de reconstruction 120, la valeur de la hauteur de reconstruction Zr entre la valeur nulle et une valeur prédéterminée strictement inférieure à la deuxième distance D2. Ladite valeur prédéterminée de la hauteur de reconstruction Zr est, par exemple, égale à 0,9 fois la deuxième distance D2.

En complément, les propriétés optiques de la première structure 41A sont reconstruites pour la première valeur Zr1 de la hauteur de reconstruction, voire pour le premier intervalle de valeurs [Zr1min ; Zr1max]. Les propriétés optiques de la deuxième structure 41B sont reconstruites pour la deuxième valeur Zr2 de la hauteur de reconstruction, la deuxième valeur Zr2 étant distincte de la première valeur Zr1, voire pour le deuxième intervalle de valeurs [Zr2min ; Zr2max]. Ces plages de valeurs sont déterminées expérimentalement, en fonction de la qualité des reconstructions obtenues.

A partir des images reconstruites, on détermine des paramètres du noyau 41A ou de la cellule 22. Le noyau 41A étant en forme d'une ellipse, ces paramètres sont, par exemple, la longueur du plus grand axe de l'ellipse, l'aire de l'ellipse, la circularité de l'ellipse, ou encore le ratio entre le petit axe et le grand axe de l'ellipse.

Le système et le procédé de reconstruction selon l'invention présentent de nombreux avantages. Ils permettent notamment d'observer un grand nombre d'objets diffractants 22 à la fois, le nombre de cellules 22 observé étant par exemple de l'ordre de 10000 avec un capteur matriciel 28 présentant une surface de quelques millimètres carrés.

Le système de reconstruction 20 présente en outre un encombrement réduit, tel qu'illustré sur les figures 1 et 2, le boîtier de protection 38 présentant notamment un diamètre de l'ordre de 10 cm et une hauteur de l'ordre de 2 cm.

Le système de reconstruction 20 est alors directement insérable dans un incubateur. Ceci évite d'avoir à retirer les cellules 22 de l'incubateur lorsqu'on souhaite les observer, et la croissance des cellules 22 n'est en outre pas stoppée lors de leur observation.

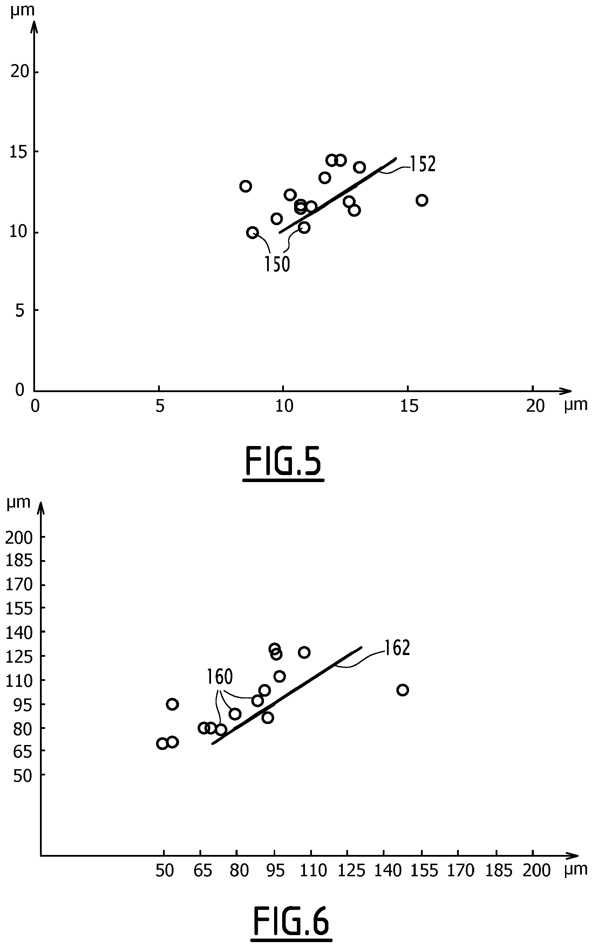

De plus, le fait d'observer un grand nombre d'objets 22 à la fois permet d'effectuer une analyse statistique de paramètres des structures reconstruites, comme illustré sur les figures 5 et 6.

Sur la figure 5, des premiers cercles 150 sont représentés pour indiquer la longueur du plus grand axe du noyau 41A pour une pluralité de cellules 22 observées, l'axe des abscisses correspondant à la longueur déterminée à l'aide du procédé de reconstruction et du système de construction 20 selon l'invention, et l'axe des ordonnées correspondant à la longueur mesurée à l'aide d'un microscope. Les résultats observés pour les différentes cellules 22 montrent que les valeurs des longueurs du plus grand axe déterminées à l'aide du procédé de reconstruction selon l'invention présentent une bonne précision, puisque les premiers cercles 150 sont proches d'une première droite 152 correspondant à la détermination exacte desdites longueurs du plus grand axe, la première droite 152 étant la représentation de la fonction affine identité.

La figure 6 est une vue analogue à celle de la figure 5 dans le cas où le paramètre déterminé pour les noyaux 41A est l'aire de l'ellipse. Sur la figure 6, des deuxièmes cercles 160 sont représentés pour indiquer l'aire de l'ellipse, l'axe des abscisses correspondant à l'aire déterminée à l'aide du procédé de reconstruction selon l'invention, et l'axe des ordonnées correspondant à l'aire mesurée à l'aide du microscope.

La figure 6 montre également que les paramètres déterminés, c'est-à-dire les aires des ellipses correspondant aux noyaux 41A des différentes cellules 22, sont obtenus avec une bonne précision, puisque les deuxièmes cercles 160 sont proches d'une deuxième droite 162 correspondant à la détermination exacte des aires des noyaux 41A, la deuxième droite 162 étant la représentation de la fonction affine identité.

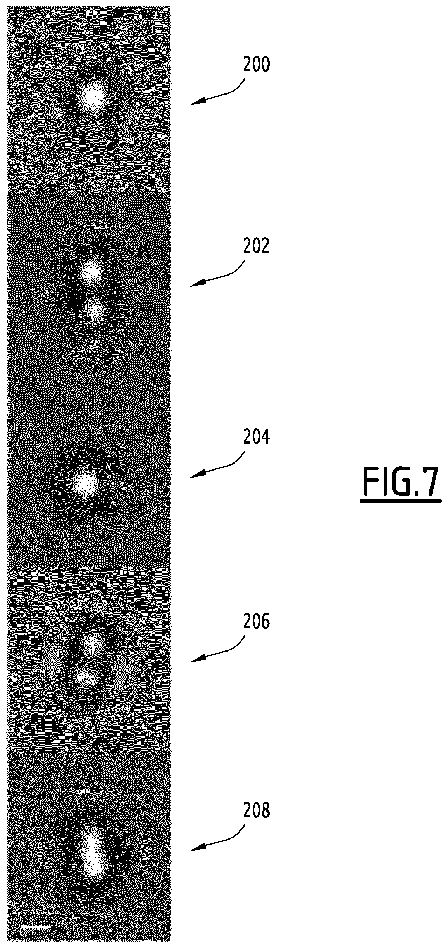

La figure 7 représente cinq figures de diffraction 200, 202, 204, 206, 208 obtenues à l'aide du photodétecteur matriciel 28 pour cinq objets diffractants 22 différents.

La figure 8 représente cinq premières images de reconstructions 210, 212, 214, 216, 218 obtenues pour une hauteur de reconstruction Zr appartenant au premier intervalle de valeurs [Zr1min ; Zr1max] à partir de l'intensité mesurée correspondant aux images acquises 200, 202, 204, 206, 208 respectives. Plus précisément, la figure 8 représente la distribution spatiale de l'absorption. Les images de reconstructions 210, 212, 214, 216, 218 obtenues pour le premier intervalle de valeurs permettent alors d'observer les noyaux 41A des différentes cellules 22. Les plus grands axes des noyaux 41A présentent une valeur de l'ordre de 10 $\mu$m.

La figure 9 représente cinq premières images de référence 220, 222, 224, 226, 228 obtenues à l'aide du microscope pour les noyaux 41A des mêmes cellules 22.

La comparaison des figures 8 et 9 montre que le procédé de reconstruction selon l'invention est particulièrement efficace puisque les noyaux 41A présentent sensiblement la même forme et les mêmes dimensions dans le cas où leurs propriétés optiques sont reconstruites à l'aide du procédé de reconstruction et dans le cas où ils sont observés à l'aide du microscope.

La figure 10 représente cinq deuxièmes images de reconstruction 230, 232, 234, 236, 238 obtenues pour une hauteur de reconstruction Zr appartenant au deuxième intervalle de valeurs [Zr2min ; Zr2max] à partir de l'intensité mesurée correspondant aux images acquises 200, 202, 204, 206, 208. Plus précisément, la figure 10 représente la distribution spatiale de l'absorption. Les deuxièmes images de reconstructions 230, 232, 234, 236, 238 correspondent aux cytoplasmes 41B des différentes cellules 22. Les cytoplasmes 41B présentent une taille de l'ordre de 20 $\mu$m.

La figure 11 représente cinq deuxièmes images de référence 240, 242, 244, 246, 248 correspondant aux cytoplasmes 41B des mêmes cellules 22, obtenues à l'aide du microscope.

De manière analogue à la comparaison des figures 8 et 9, la comparaison des figures 10 et 11 montre que le procédé de reconstruction selon l'invention est particulièrement efficace puisque les cytoplasmes 41B reconstruits, visibles sur la figure 10, présentent chacun une forme et des dimensions proches des cytoplasmes 41B observés à l'aide du microscope, visibles sur la figure 11.

Dans l'exemple de réalisation de la figure 8, le premier intervalle de valeurs [Zr1min ; Zr1max] correspond aux valeurs de la hauteur de reconstruction Zr comprises entre 280 $\mu$m et 350 $\mu$m, et dans l'exemple de réalisation de la figure 10, le deuxième intervalle de valeurs [Zr2min ; Zr2max] correspond aux valeurs de la hauteur de reconstruction Zr comprises entre 410 $\mu$m et 450 $\mu$m, avec la deuxième distance D2 sensiblement égale à 700$\mu$m dans les deux exemples.

Il est à noter que d'autres essais ont été effectués pour différentes valeurs de la deuxième distance D2 afin de déterminer les valeurs des premier et deuxième intervalles [Zr1min ; Zr1max], [Zr2min ; Zr2max] permettant de reconstruire le noyau 41A et respectivement le cytoplasme 41B pour ces valeurs de la deuxième distance D2.

Lorsque la deuxième distance D2 est sensiblement égale à 500 $\mu$m, le premier intervalle de valeurs [Zr1min ; Zr1max] correspond aux valeurs de la hauteur de reconstruction Zr comprises entre 240 $\mu$m et 280 $\mu$m et le deuxième intervalle de valeurs [Zr2min ; Zr2max] correspond à celles comprises entre 380 $\mu$m et 420 $\mu$m.

Lorsque la deuxième distance D2 est sensiblement égale à 2000 $\mu$m, le premier intervalle de valeurs [Zr1min ; Zr1max] correspond aux valeurs de la hauteur de reconstruction Zr comprises entre 1200 $\mu$m et 1300 $\mu$m, et le deuxième intervalle de valeurs [Zr2min ; Zr2max] correspond à celles comprises entre 1400 $\mu$m et 1500 $\mu$m.

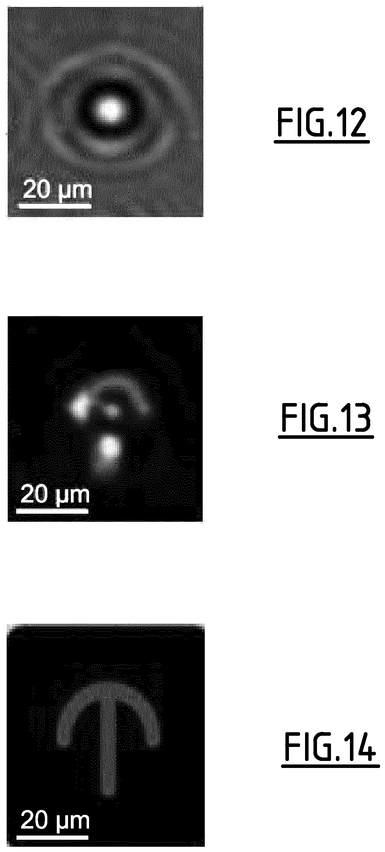

La figure 12 représente une figure de diffraction acquise directement par le photodétecteur 28 pour un autre objet diffractant 22, la figure 13 représente la reconstruction de cet objet 22 pour une hauteur de reconstruction Zr strictement inférieure à la deuxième distance D2 entre le milieu 24 et le photodétecteur 28, et la figure 14 représente une image de référence de l'objet diffractant 22, obtenue à l'aide du microscope. Plus précisément, la figure 13 représente la distribution spatiale de l'absorption.

La comparaison des figures 13 et 14 montre là encore que le procédé de reconstruction selon l'invention permet d'obtenir des résultats satisfaisants puisque les dimensions et la forme de l'objet reconstruit, visible sur la figure 13, sont très proches de celles de l'image de référence, visible sur la figure 14. Cette image de référence représente un substrat chimiquement fonctionnalisé pour favoriser l'adhésion de cellules selon une forme prédéterminée. Du fait de cette fonctionnalisation, le cytosquelette de la cellule (cellule NIH 3T3) prend une forme particulière, cette forme étant cohérente avec la forme observée sur la figure 13.

Le système de reconstruction 20 et le procédé de reconstruction selon l'invention permettent donc de reconstruire les propriétés optiques des objets 22 de manière très satisfaisante, les résultats étant proches de ceux observés à l'aide d'un microscope, et ce même pour des objets présentant un diamètre inférieur à environ 20 μm.

Le système de reconstruction 20 et le procédé de reconstruction selon l'invention autorisent en outre l'observation d'un grand nombre d'objets 22 à la fois. Le système de reconstruction 20 présente encore un encombrement réduit, ce qui permet de l'insérer directement dans un incubateur, et facilite alors grandement les opérations d'observation et de reconstruction des propriétés optiques des objets 22.

On conçoit ainsi que le système de reconstruction 20 et le procédé de reconstruction selon l'invention permettent de reconstruire les propriétés optiques de particules 22 dont la taille est inférieure à environ 20 μm, telles que des cellules avec un diamètre de l'ordre de 10 μm, des bactéries avec un diamètre de l'ordre de 1 μm, ou encore des virus.

L'exemple suivant montre comment on obtient une image de reconstruction, représentant le module de l'absorption $a(x,y)$, à une hauteur de reconstruction z donnée, en fonction de l'image $I(x,y)$ acquise par un photodétecteur matriciel 28.

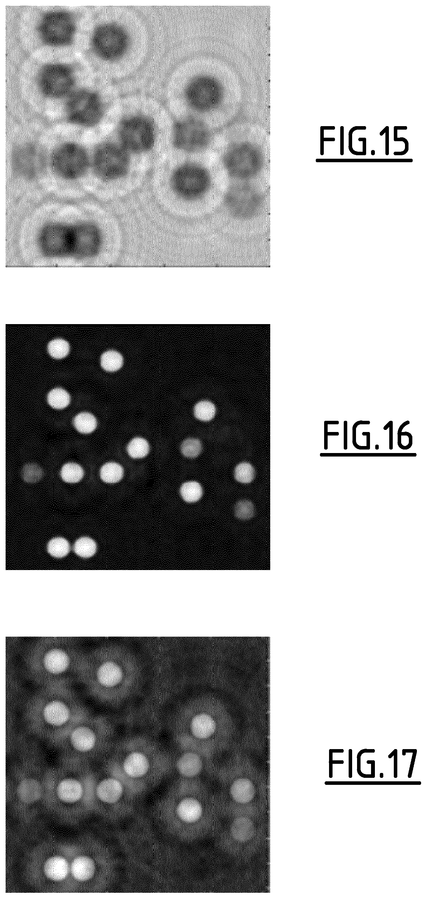

Dans l'exemple des figures 15 à 20, la deuxième distance D2 entre le milieu 24 et le photodétecteur matriciel 28 selon la direction verticale Z est sensiblement égale à 500 μm, et les objets diffractants 22, également appelés éléments diffractants, sont chacun en forme d'une sphère présentant un diamètre de l'ordre de 10 μm.

La figure 15 représente une image des éléments diffractants 22 acquise par le photodétecteur 28, le niveau de gris de cette image représentant l'absorption (c'est-à-dire le module de l'absorption complexe) de chaque élément diffractant 22.

La figure 16 représente une simulation de l'image acquise par le photodétecteur 28, c'est-à-dire de l'intensité mesurée I par le photodétecteur 28. En appliquant l'algorithme de reconstruction décrit par l'équation (1), c'est-à-dire en effectuant l'opération de convolution $I * h_{-z}$ précédemment décrite, on obtient une image reconstruite complexe, dont le module est représenté sur la figure 17. On y observe la distribution spatiale de l'absorption, à laquelle se superpose un signal bruité, usuellement désigné par le terme « twin image » et noté *ti*. Le twin image est, par exemple, décrit dans l'article « Phase retrieval algorithms: a comparison » de J.R. Fienup publié en août 1982 dans la revue Applied Optics, volume 21, numéro 15.

Des méthodes pour réduire l'influence du twin image sont connues de l'homme du métier, et ont été décrites dans la littérature dans les années 2000. Ainsi, il est possible d'améliorer cette représentation de l'image reconstruite, de manière à diminuer la contribution du signal de twin image et alors obtenir une distribution spatiale de l'absorption à la distance z du photodétecteur 28, en direction de la source de lumière 26.

L'exemple suivant est un exemple d'algorithme mis en œuvre. Pour cela, on considère que la convolution du signal de twin image par la fonction $h_{2z}$ conduit à une estimation de l'opacité complexe a. De même, on considère que la convolution de l'opacité complexe a par la fonction $h_{2z}$ conduit à une estimation du twin image *ti*.

Autrement dit, on considère que

$$a * h_{2z} = ti$$

$$ti * h_{2z} = a$$

A partir de l'image complexe reconstruite $I * h_{-z}$, un algorithme itératif est appliqué, pour réduire l'influence du bruit de twin image sur l'image ainsi reconstruite. Cet algorithme comprend les étapes suivantes :

- mémorisation d'une image initiale, notée $Im_{initial}$, telle que $Im_{initial} = I * h_{-z}$,
- début d'une itération i
- seuillage en amplitude de l'image $Im_i$, le seuil étant, par exemple, supérieur à la valeur moyenne du twin image, de façon à masquer les pixels inférieurs au seuil. Ce seuillage est réalisé automatiquement ou bien manuellement. Lors de la première itération, on a l'égalité $Im_{i=1} = Im_{initial}$. On considère que l'image $Im_i$ ainsi seuillée est une bonne estimation de l'opacité a à l'itération i, notée $a_i$.
- estimation du signal de twin image à l'itération i : $ti_i = Im_i - a_i$
- mémorisation d'une nouvelle image $Im_{i+1} = ti_i * h_{2z}$
- mise en œuvre de l'itération suivante, l'algorithme itératif s'arrêtant selon un critère d'arrêt déterminé. Un tel critère est, par exemple, un nombre prédéfini d'itérations, ou encore une comparaison entre $Im_i$ et $a_i$, ou entre $Im_i$ et $Im_{i-1}$

A l'issue de l'algorithme itératif, on obtient une image Im, qui correspond à une estimation correcte de l'opacité complexe a. En représentant le module de cette opacité complexe, on obtient la distribution de l'absorption à la distance z considérée.

Une mise en œuvre de cet algorithme est illustrée sur les figures 17 à 20.

La figure 17 représente le module de la fonction complexe $Im_1 = I * h_{-z}$, $I$ étant l'image acquise par le photodétecteur 28, représentée sur la figure 16, qui constitue l'image de départ de l'algorithme.

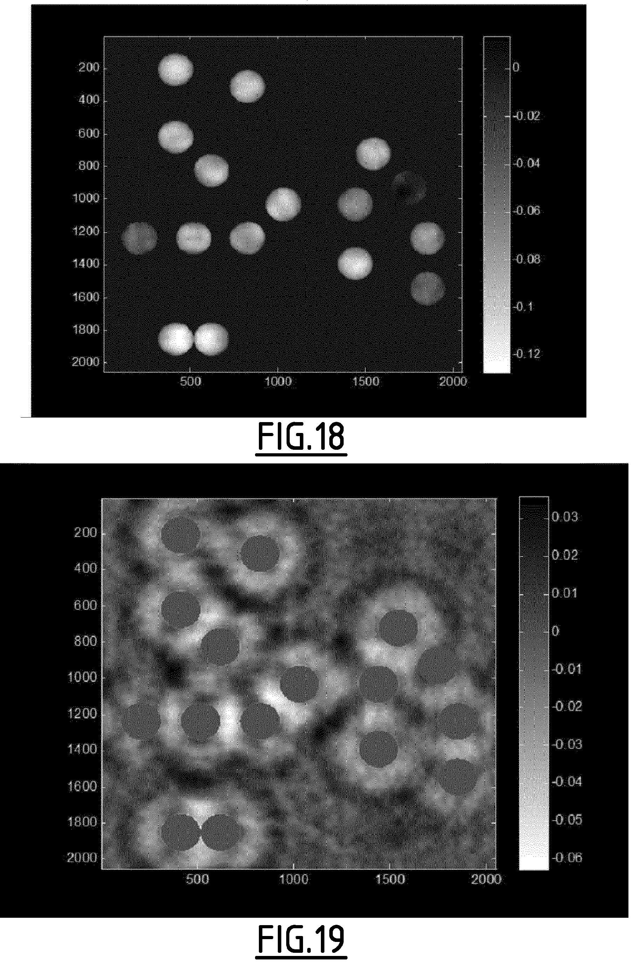

La figure 18 représente l'image de la figure 17 après seuillage en amplitude, de façon à masquer les pixels inférieurs audit seuil. Il s'agit d'une estimation de l'opacité complexe $a_{i=1}$

La figure 19 représente le module de la fonction $t_{i\,i=1} = Im_{i=1} - a_{i\,i=1}$. Il s'agit de l'estimation du bruit de twin image à la première itération.

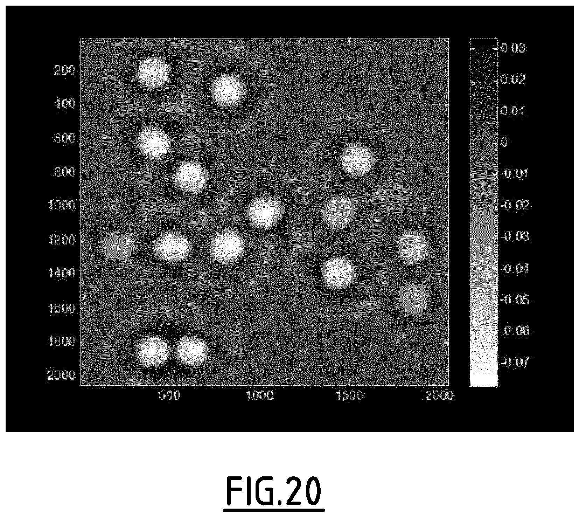

La figure 20 représente le module de la fonction $Im_{i=2} = t_{i=1} * h_{2z}$, qui correspond à l'image servant de base à la deuxième itération. On voit alors qu'entre les images $Im_{i=1}$ (figure 17) et $Im_{i=2}$, (figure 20), c'est-à-dire entre deux itérations successives, le signal de twin image a été considérablement diminué, ce qui permet de mieux distinguer la répartition spatiale de l'absorption à la hauteur de reconstruction, la figure 15 servant d'image de référence.

## Revendications

1. Procédé de reconstruction de propriétés optiques d'objets diffractants (22) baignant dans un milieu liquide (24), à l'aide d'un système de reconstruction (20) comprenant une source de lumière spatialement cohérente (26) et un photodétecteur matriciel (28), le milieu liquide (24) étant délimité par une surface transparente (42), les objets diffractants (22) étant au contact de la surface transparente (42),

   le procédé de reconstruction comprenant les étapes suivantes :

   - l'éclairement (100) du milieu (24) par la source de lumière spatialement cohérente (26),
   - la mesure (110), par le photodétecteur matriciel (28), d'une intensité (I) d'au moins une figure de diffraction transmise par le milieu éclairé (24) selon une direction verticale (Z), la ou chaque figure de diffraction correspondant à des ondes diffractées par un ou plusieurs objets diffractants (22) lors de l'éclairement du milieu (24),
   - la reconstruction (120) des propriétés optiques des objets (22) à une hauteur de reconstruction (Zr), suivant un algorithme de reconstruction à partir de l'intensité mesurée (I),

   **caractérisé en ce que**
   lors de l'étape de reconstruction (120), la hauteur de reconstruction (Zr) présente une valeur strictement inférieure à celle de la distance (D2) entre le milieu (24) et le photodétecteur matriciel (28) selon la direction verticale (Z), de préférence inférieure à 0,9 fois ladite distance (D2) entre le milieu (24) et le photodétecteur (28), de préférence encore inférieure à 0,8 fois ladite distance (D2), et
   lors de l'étape de reconstruction (120), l'algorithme de reconstruction vérifiant l'équation suivante :

   $$I(x,y) * h_{-Zr}(x,y) = e^{j2\pi\frac{-Zr}{\lambda}}\left(1 - a(x,y) - e^{j2\pi\frac{2Zr}{\lambda}}.a^*(x,y) * h_{-2Zr}(x,y)\right)$$

   où I représente l'intensité mesurée par le photodétecteur matriciel (28),

   x, y représentent les coordonnées dans un plan perpendiculaire à la direction verticale (Z), * désigne le produit de convolution,
   Zr représente la hauteur de reconstruction,
   $\lambda$ représente la longueur d'onde de la source de lumière (26), j représente le nombre imaginaire unitaire,
   a représente la fonction d'opacité complexe d'un objet (22), a* représente le complexe conjugué de a, et
   $h_z$ est défini par l'équation suivante :

   $$h_z(x,y) = \frac{1}{j\lambda z}e^{j2\pi\frac{z}{\lambda}}\exp(j\pi\frac{x^2+y^2}{\lambda z}).$$

2. Procédé selon la revendication 1, dans lequel, lors de l'étape de reconstruction (120), les propriétés optiques des objets (22) sont reconstruites pour différentes valeurs de la hauteur de reconstruction (Zr), chacune étant strictement inférieure à la valeur de la distance (D2) entre le milieu (24) et le photodétecteur matriciel (28) selon la direction verticale (Z).

**3.** Procédé selon la revendication 2, dans lequel au moins un objet (22) comporte une première structure (41A) et une deuxième structure (41B), et dans lequel les propriétés optiques de la première structure (41A) sont reconstruites pour une première valeur (Zr1) de la hauteur de reconstruction (Zr), et les propriétés optiques de la deuxième structure (41B) sont reconstruites pour une deuxième valeur (Zr2) de la hauteur de reconstruction (Zr), la deuxième valeur (Zr2) étant distincte de la première valeur (Zr1).

**4.** Procédé selon la revendication 3, dans lequel l'objet (22) est une cellule comportant un noyau (41A) et un cytoplasme (41B), et dans lequel une image représentative du noyau (41A) est reconstruite pour un premier intervalle de valeurs ([Zr1min ; Zr1max]) et une image représentative du cytoplasme (41B) est reconstruite pour un deuxième intervalle de valeurs ([Zr2min ; Zr2max]), le deuxième intervalle ([Zr2min ; Zr2max]) étant distinct du premier intervalle ([Zr1min ; Zr1max]), le deuxième intervalle ([Zr2min ; Zr2max]) étant de préférence disjoint du premier intervalle ([Zr1min ; Zr1max]), les valeurs du premier intervalle ([Zr1min ; Zr1max]) étant de préférence encore inférieures à celle du deuxième intervalle ([Zr2min ; Zr2max]).

**5.** Procédé selon la revendication 4, dans lequel la distance (D2) entre le milieu (24) et le photodétecteur matriciel (28) selon la direction verticale (Z) est sensiblement égale à 500 $\mu$m, le premier intervalle ([Zr1min ; Zr1max]) est l'intervalle de valeurs comprises entre 240 $\mu$m et 280 $\mu$m, et le deuxième intervalle ([Zr2min ; Zr2max]) est l'intervalle de valeurs comprises entre 380 $\mu$m et 420 $\mu$m.

**6.** Procédé selon l'une quelconque des revendications précédentes, dans lequel l'intensité (I) de la ou chaque figure de diffraction est mesurée directement par le photodétecteur matriciel (28), en l'absence d'une optique de grossissement disposée entre le milieu (24) et le photodétecteur (28).

**7.** Procédé selon l'une quelconque des revendications précédentes, dans lequel les propriétés optiques reconstruites comportent l'absorption de l'objet (22) et/ou le retard de phase produit par l'objet (22).

**8.** Système (20) de reconstruction de propriétés optiques d'objets diffractants (22) baignant dans un milieu liquide (24), le milieu liquide (24) étant délimité par une surface transparente (42), les objets diffractants (22) étant au contact de la surface transparente (42), le système de reconstruction (20) comprenant :

- une source de lumière spatialement cohérente (26), propre à éclairer le milieu (24),
- un photodétecteur matriciel (28), propre à mesurer une intensité (I) d'au moins une figure de diffraction transmise par le milieu éclairé (24) selon une direction verticale (Z), la ou chaque figure de diffraction correspondant à des ondes diffractées par un ou plusieurs d'objets diffractants (22) lors de l'éclairement du milieu (24),
- des moyens (36) de reconstruction des propriétés optiques des objets (22) à une hauteur de reconstruction (Zr), suivant un algorithme de reconstruction à partir de l'intensité mesurée (I), **caractérisé en ce que** la hauteur de reconstruction (Zr) présente une valeur strictement inférieure à celle de la distance (D2) entre le milieu (22) et le photodétecteur matriciel (28) selon la direction verticale (Z), de préférence inférieure à 0,9 fois ladite distance (D2) entre le milieu (24) et le photodétecteur (28), de préférence encore inférieure à 0,8 fois ladite distance (D2), et

l'algorithme de reconstruction vérifiant l'équation suivante :

$$I(x, y) * h_{-Zr}(x, y) = e^{j2\pi\frac{-Zr}{\lambda}}\left(1 - a(x, y) - e^{j2\pi\frac{2Zr}{\lambda}}.a^{*}(x, y) * h_{-2Zr}(x, y)\right)$$

où I représente l'intensité mesurée par le photodétecteur matriciel (28),

$x$, y représentent les coordonnées dans un plan perpendiculaire à la direction verticale (Z), * désigne le produit de convolution,
Zr représente la hauteur de reconstruction,
$\lambda$ représente la longueur d'onde de la source de lumière (26), j représente le nombre imaginaire unitaire,
a représente la fonction d'opacité complexe d'un objet (22), a* représente le complexe conjugué de a, et
$h_z$ est défini par l'équation suivante :

$$h_z(x, y) = \frac{1}{j\lambda z} e^{j2\pi\frac{z}{\lambda}} \exp(j\pi\frac{x^2 + y^2}{\lambda z}).$$

**9.** Système (20) selon la revendication 8, dans lequel la source de lumière (26) comporte une diode électroluminescente (46) et un diaphragme (48) disposé au contact de la diode électroluminescente (46).

**10.** Système (20) selon la revendication 8 ou 9, dans lequel le photodétecteur matriciel (28) est un capteur CCD ou un capteur CMOS.

**Patentansprüche**

**1.** Verfahren zur Rekonstruktion optischer Eigenschaften von beugenden Objekten (22), die in ein flüssiges Medium (24) eingetaucht sind, mit Hilfe eines Rekonstruktionssystems (20), das eine räumlich kohärente Lichtquelle (26) und einen Matrix-Photodetektor (28) umfasst, wobei das flüssige Medium (24) durch eine transparente Fläche (42) begrenzt ist und die beugenden Objekte (22) in Kontakt mit der transparenten Fläche (42) sind, wobei das Rekonstruktionsverfahren die folgenden Schritte umfasst:

- Beleuchten (100) des Mediums (24) durch die räumlich kohärente Lichtquelle (26),
- Messen (110) einer Intensität (I) mindestens eines Beugungsmusters, das von dem beleuchteten Medium (24) gemäß einer vertikalen Richtung (Z) durchgelassen wird, mit dem Matrix-Photodetektor (28), wobei das oder jedes Beugungsmuster Wellen entspricht, die von einem oder mehreren beugenden Objekten (22) gebeugt werden, wenn das Medium (24) beleuchtet wird,
- Rekonstruieren (120) der optischen Eigenschaften der Objekte (22) bei einer Rekonstruktionshöhe (Zr) nach einem Rekonstruktionsalgorithmus aus der gemessenen Intensität (I),

**dadurch gekennzeichnet, dass**
während des Rekonstruktionsschritts (120) die Rekonstruktionshöhe (Zr) einen Wert hat, der streng unter dem des Abstands (D2) zwischen dem Medium (24) und dem Matrix-Photodetektor (28) in vertikaler Richtung (Z) liegt, vorzugsweise unter dem 0,9-fachen des Abstands (D2) zwischen dem Medium (24) und dem Photodetektor (28), noch bevorzugter unter dem 0,8-fachen des Abstands (D2), und
im Rekonstruktionsschritt (120) der Rekonstruktionsalgorithmus die folgende Gleichung erfüllt:

$$I(x, y) * h_{-Zr}(x, y) = e^{j2\pi\frac{-Zr}{\lambda}}\left(1 - a(x, y) - e^{j2\pi\frac{2Zr}{\lambda}}.a^*(x, y) * h_{-2Zr}(x, y)\right)$$

wobei I die vom Matrix-Photodetektor (28) gemessene Intensität bedeutet,

x, y die Koordinaten in einer Ebene senkrecht zur vertikalen Richtung (Z) bedeuten, * das Faltungsprodukt angibt, Zr die Rekonstruktionshöhe bedeutet,
λ die Wellenlänge der Lichtquelle (26) bedeutet, j die imaginäre Einheitszahl bedeutet,
a die komplexe Opazitätsfunktion eines Objekts (22) darstellt, a* die konjugiert komplexe Funktion von a darstellt, und
$h_z$ durch die folgende Gleichung definiert ist:

$$h_z(x, y) = \frac{1}{j\lambda z} e^{j2\pi\frac{z}{\lambda}} \exp(j\pi\frac{x^2 + y^2}{\lambda z}).$$

**2.** Verfahren nach Anspruch 1, bei dem im Rekonstruktionsschritt (120) die optischen Eigenschaften der Objekte (22) für verschiedene Werte der Rekonstruktionshöhe (Zr) rekonstruiert werden, von denen jeder streng kleiner ist als der Wert des Abstands (D2) zwischen dem Medium (24) und dem Matrix-Photodetektor (28) in vertikaler Richtung (Z).

3. Verfahren nach Anspruch 2, bei dem mindestens ein Objekt (22) eine erste Struktur (41A) und eine zweite Struktur (41B) aufweist, und bei dem die optischen Eigenschaften der ersten Struktur (41A) für einen ersten Wert (Zr1) der Rekonstruktionshöhe (Zr) rekonstruiert werden, und die optischen Eigenschaften der zweiten Struktur (41B) für einen zweiten Wert (Zr2) der Rekonstruktionshöhe (Zr) rekonstruiert werden, wobei der zweite Wert (Zr2) unterschiedlich zum ersten Wert (Zr1) ist.

4. Verfahren nach Anspruch 3, bei dem das Objekt (22) eine Zelle ist, die einen Kern (41A) und ein Zytoplasma (41B) aufweist, und bei dem ein für den Kern (41A) repräsentatives Bild für einen ersten Wertebereich ([Zr1min; Zr1max]) rekonstruiert wird und ein für das Zytoplasma (41B) repräsentatives Bild für einen zweiten Wertebereich ([Zr2min; Zr2max]) rekonstruiert wird, wobei der zweite Bereich ([Zr2min; Zr2max]) von dem ersten Bereich ([Zr1min; Zr1max]) verschieden ist und der zweite Bereich ([Zr2min; Zr2max]) vorzugsweise disjunkt von dem ersten Bereich ([Zr1min; Zr1max]) ist, wobei die Werte des ersten Bereichs ([Zr1min; Zr1max]) vorzugsweise noch niedriger als die des zweiten Bereichs ([Zr2min; Zr2max]) sind.

5. Verfahren nach Anspruch 4, bei dem der Abstand (D2) zwischen dem Medium (24) und dem Matrix-Photodetektor (28) gemäß der vertikalen Richtung (Z) im Wesentlichen gleich 500 $\mu$m ist, der erste Bereich ([Zr1min; Zr1max]) der Wertebereich zwischen 240 $\mu$m und 280 $\mu$m ist und der zweite Bereich ([Zr2min; Zr2max]) der Wertebereich zwischen 380 $\mu$m und 420 $\mu$m ist.

6. Verfahren nach einem beliebigen der vorhergehenden Ansprüche, bei dem die Intensität (I) des oder jedes Beugungsmusters direkt von dem Matrix-Photodetektor (28) ohne eine zwischen dem Medium (24) und dem Photodetektor (28) angeordnete Vergrößerungsoptik gemessen wird.

7. Verfahren nach einem beliebigen der vorhergehenden Ansprüche, bei dem die rekonstruierten optischen Eigenschaften die Absorption des Objekts (22) und/oder die von dem Objekt (22) erzeugte Phasenverzögerung aufweisen.

8. System (20) zur Rekonstruktion optischer Eigenschaften von beugenden Objekten (22), die in ein flüssiges Medium (24) eingetaucht sind, wobei das flüssige Medium (24) durch eine transparente Fläche (42) begrenzt ist und die beugenden Objekte (22) in Kontakt mit der transparenten Fläche (42) sind, wobei das Rekonstruktionssystem (20) umfasst:

   - eine räumlich kohärente Lichtquelle (26), die geeignet ist, das Medium (24) zu beleuchten,
   - einen Matrix-Photodetektor (28), der geeignet ist, eine Intensität (I) mindestens eines Beugungsmusters, das von dem beleuchteten Medium (24) gemäß einer vertikalen Richtung (Z) durchgelassen wird, zu messen, wobei das oder jedes Beugungsmuster Wellen entspricht, die von einem oder mehreren beugenden Objekten (22) gebeugt werden, wenn das Medium (24) beleuchtet wird,
   - Mittel (36) zum Rekonstruieren der optischen Eigenschaften der Objekte (22) bei einer Rekonstruktionshöhe (Zr) gemäß einem Rekonstruktionsalgorithmus aus der gemessenen Intensität (I), **dadurch gekennzeichnet, dass** die Rekonstruktionshöhe (Zr) einen Wert hat, der streng kleiner ist als der des Abstands (D2) zwischen dem Medium (22) und dem Matrix-Photodetektor (28) gemäß der vertikalen Richtung (Z), vorzugsweise kleiner als das 0,9-fache des Abstands (D2) zwischen dem Medium (24) und dem Photodetektor (28), und noch bevorzugter kleiner als das 0,8-fache des Abstands (D2), und

   wobei der Rekonstruktionsalgorithmus die folgende Gleichung erfüllt:

$$I(x,y) * h_{-Zr}(x,y) = e^{j2\pi\frac{-Zr}{\lambda}}\left(1 - a(x,y) - e^{j2\pi\frac{2Zr}{\lambda}}.a^*(x,y) * h_{-2Zr}(x,y)\right)$$

   wobei I die vom Matrix-Photodetektor (28) gemessene Intensität bedeutet,

   x, y die Koordinaten in einer Ebene senkrecht zur vertikalen Richtung (Z) bedeuten, * das Faltungsprodukt angibt, Zr die Rekonstruktionshöhe bedeutet,
   $\lambda$ die Wellenlänge der Lichtquelle (26) bedeutet, j die imaginäre Einheitszahl bedeutet,
   a die komplexe Opazitätsfunktion eines Objekts (22) darstellt, a* die konjugiert komplexe Funktion von a darstellt, und
   $h_z$ durch die folgende Gleichung definiert ist:

$$h_z(x, y) = \frac{1}{j\lambda z} e^{j2\pi\frac{z}{\lambda}} \exp(j\pi\frac{x^2+y^2}{\lambda z}).$$

9. System (20) nach Anspruch 8, bei dem die Lichtquelle (26) eine lichtemittierende Diode (46) und eine Blende (48) aufweist, die in Kontakt mit der lichtemittierenden Diode (46) angeordnet ist.

10. System (20) nach Anspruch 8 oder 9, bei dem der Matrix-Photodetektor (28) ein CCD- oder CMOS-Sensor ist.

**Claims**

1. A method for reconstructing optical properties of diffracting objects (22) bathed in a liquid medium (24), using a reconstruction system (20) comprising a spatially coherent light source (26) and a matrix photodetector (28), the liquid medium (24) being delimited by a transparent surface (42), the diffracting objects (22) being in contact with the transparent surface (42), the reconstruction method comprising the following steps:

   - lighting (100) the medium (24) with the spatially coherent light source (26),
   - measuring (110), with the matrix photodetector (28), an intensity (I) of at least one diffraction pattern transmitted by the lit medium (24) in a vertical direction (Z), the or each diffraction pattern corresponding to waves diffracted by one or more diffracting objects (22) during lighting of the medium (24),
   - reconstructing (120) the optical properties of the objects (22) at a reconstruction height (Zr), according to a reconstruction algorithm, based on the measured intensity (I), **characterized in that**, during the reconstruction step (120), the reconstruction height (Zr) has a value strictly lower than that of the distance (D2) between the medium (24) and the matrix photodetector (28) in the vertical direction (Z), preferably lower than 0.9 times said distance (D2) between the medium (24) and the photodetector (28), more preferably lower than 0.8 times said distance (D2), and

   during the reconstruction step (120), the reconstruction algorithm verifies the following equation:

   $$I(x, y) * h_{-Zr}(x, y) = e^{j2\pi\frac{-Zr}{\lambda}} \left( 1 - a(x, y) - e^{j2\pi\frac{2Zr}{\lambda}} . a^*(x, y) * h_{-2Zr}(x, y) \right)$$

   where I represents the intensity measured by the matrix photodetector (28),

   x, y represent the coordinates in a plane perpendicular to the vertical direction (Z), * designates the convolution product,
   Zr represents the reconstruction height,
   $\lambda$ represents the wavelength of the light source (26), j represents the unitary imaginary number,
   a represents the complex opacity function of an object (22), a* represents the conjugated complex of a, and
   $h_z$ is defined by the following equation:

   $$h_z(x, y) = \frac{1}{j\lambda z} e^{j2\pi\frac{z}{\lambda}} \exp(j\pi\frac{x^2+y^2}{\lambda z})$$
   .

2. The method according to claim 1, wherein, during the reconstruction step (120), the optical properties of the objects (22) are reconstructed for different values of the reconstruction height (Zr), each being strictly below the value of the distance (D2) between the medium (24) and the matrix photodetector (28) in the vertical direction (Z).

3. The method according to claim 2, wherein at least one object (22) comprises a first structure (41A) and a second structure (41B), and wherein the optical properties of the first structure (41A) are reconstructed for a first value (Zr1) of the reconstruction height (Zr), and the optical properties of the second structure (41B) are reconstructed for a second value (Zr2) of the reconstruction height (Zr), the second value (Zr2) being different from the first value (Zr1).

4. The method according to claim 3, wherein the object (22) is a cell comprising a core (41A) and a cytoplasm (41B), and wherein an image representative of the core (41A) is reconstructed for a first value interval ([Zr1min; Zr1max]) and an image representative of the cytoplasm (41B) is reconstructed for a second value interval ([Zr2min; Zr2max]), the second interval ([Zr2min; Zr2max]) being different from the first interval ([Zr1min; Zr1max]), the second interval ([Zr2min; Zr2max]) being preferably separated from the first interval ([Zr1min; Zr1max]), the values of the first interval ([Zr1min; Zr1max]) being more preferably lower than that of the second interval ([Zr2min; Zr2max]).

5. The method according to claim 4, wherein the distance (D2) between the medium (24) and the matrix photodetector (28) in the vertical direction (Z) is substantially equal to 500 $\mu$m, the first interval ([Zr1min; Zr1max]) is the interval of values comprised between 240 $\mu$m and 280 $\mu$m, and the second interval ([Zr2min; Zr2max]) is the interval of values comprised between 380 $\mu$m and 420 $\mu$m.

6. The method according to any one of the preceding claims, wherein the intensity (I) of the or each diffraction pattern is measured directly by the matrix photodetector (28), with no magnifying lens positioned between the medium (24) and the photodetector (28).

7. The method according to any one of the preceding claims, wherein the reconstructed optical properties comprise the absorption of the object (22) and/or the phase delay produced by the object (22).

8. A system (20) for reconstructing optical properties of diffracting objects (22) bathed in a liquid medium (24), the liquid medium (24) being delimited by a transparent surface (42), the diffracting objects (22) being in contact with the transparent surface (42), the reconstruction system (20) comprising:

   - a spatially coherent light source (26), able to light the medium (24),
   - a matrix photodetector (28), able to measure an intensity (I) of at least one diffraction pattern transmitted by the lit medium (24) in a vertical direction (Z), the or each diffraction pattern corresponding to waves diffracted by one or more diffracting objects (22) during lighting of the medium (24),
   - means (36) for reconstructing the optical properties of the objects (22) at a reconstruction height (Zr), according to a reconstruction algorithm, based on the measured intensity (I),

   **characterized in that** the reconstruction height (Zr) has a value strictly lower than that of the distance (D2) between the medium (22) and the matrix photodetector (28) in the vertical direction (Z), preferably lower than 0.9 times said distance (D2) between the medium (24) and the photodetector (28), more preferably lower than 0.8 times said distance (D2), and
   the reconstruction algorithm verifying the following equation:

$$I(x, y) * h_{-Zr}(x, y) = e^{j2\pi\frac{-Zr}{\lambda}}\left(1 - a(x, y) - e^{j2\pi\frac{2Zr}{\lambda}} . a^{*}(x, y) * h_{-2Zr}(x, y)\right)$$

   where I represents the intensity measured by the matrix photodetector (28),

   x, y represent the coordinates in a plane perpendicular to the vertical direction (Z), * designates the convolution product,
   Zr represents the reconstruction height,
   $\lambda$ represents the wavelength of the light source (26), j represents the unitary imaginary number,
   a represents the complex opacity function of an object (22), a* represents the conjugated complex of a, and
   $h_z$ is defined by the following equation:

$$h_{z}(x, y) = \frac{1}{j\lambda z} e^{j2\pi\frac{z}{\lambda}} \exp(j\pi\frac{x^2 + y^2}{\lambda z})$$

   .

9. The system (20) according to claim 8, wherein the light source (26) comprises a light-emitting diode (46) and a diaphragm (48) positioned in contact with the light-emitting diode (46).

**10.** The system (20) according to claim 8 or 9, wherein the matrix photodetector (28) is a CCD sensor or a CMOS sensor.

## FIG.1

## FIG.2

## FIG.3

| | |
|---|---|
| Eclairement du milieu | 100 |
| Mesure de l'intensité I du rayonnement transmis | 110 |
| Reconstruction des propriétés optiques | 120 |

## FIG.4

FIG.5

FIG.6

FIG.7

**FIG.8**

**FIG.9**

FIG.10

FIG.11

FIG.12

20 µm

FIG.13

20 µm

FIG.14

20 µm

FIG.15

FIG.16

FIG.17

FIG.18

FIG.19

# FIG.20

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **POHER.** *Lensfree in-line holographic detection of bacteria*
- **SUNGKYUO S E et al.** *Lensfree holographic imaging for on-chip cytometry and diagnostic*
- **LOIC DENIS et al.** *Twin-image noise réduction by phase retrieval in in-line digital holography*
- Twin-image noise reduction by phase retrieval in in-line digital holography. *SPIES's Symposium on Optical Science and Technology,* 2005
- **J.R. FIENUP.** Phase retrieval algorithms: a comparison. *Applied Optics,* Août 1982, vol. 21 (15